# EUROPÄISCHE PATENTSCHRIFT

(11) **EP 1 848 556 B1**
(45) Veröffentlichungstag und Bekanntmachung des Hinweises auf die Patenterteilung: **06.08.2008**
(21) Anmeldenummer: 06704534.4
(22) Anmeldetag: 13.02.2006
(51) Int. Cl.: B21K 27/06, B23D 15/04

(54) **UMFORMMASCHINE MIT EINER SCHERVORRICHTUNG ZUM SCHEREN EINER STANGE**
FORMING MACHINE COMPRISING A SHEARING DEVICE FOR SHEARING A BAR
MACHINE D'USINAGE COMPRENANT UN DISPOSITIF DE COUPE POUR DECOUPER UNE BARRE

(30) Priorität: 17.02.2005 CH 2782005
(43) Veröffentlichungstag der Anmeldung: 31.10.2007
(73) Patentinhaber: Hatebur Umformmaschinen AG, CH-4153 Reinach (CH)
(72) Erfinder: SUTER, Michael, CH-4123 Allschwil (CH); STEMMELIN, Pascal, F-68480 Moernach (FR)
(74) Vertreter: Bollhalder, Renato
(86) Internationale Anmeldenummer: PCT/CH2006/000091
(87) Internationale Veröffentlichungsnummer: WO 2006/086901

(56) Entgegenhaltungen:
- EP-A- 0 011 293
- DE-A1- 2 711 557
- DE-A1- 2 940 375
- DE-A1- 19 850 616

## Beschreibung

Die vorliegende Erfindung bezieht sich auf eine Umformmaschine mit einer Schervorrichtung zum Scheren einer Stange, wie sie im Oberbegriff des unabhängigen Patentanspruchs 1 definiert ist.

Bei Umformmaschinen mit einer oder mehreren Umformstationen wird der ersten Umformstation oftmals ein von einer Stange abgescherter Abschnitt zur Umformung zugeführt. Die Scherung der Stange erfolgt normalerweise in einer separaten Scherstation mittels eines ortsfesten Festmessers und eines dazu verschiebbaren Schermessers, das von einem Scherschlitten hinund herbewegt wird. Für die Ausbildung des Festmessers und des Schermessers sind verschiedene Möglichkeiten bekannt.

Bei Kaltumformmaschinen werden beispielsweise oft geschlossene Rundmesser als Festmesser und Schermesser eingesetzt. Die zu scherende Stange wird in Durchgänge durch das Festmesser und das Schermesser eingeschoben und das Schermesser anschliessend schnell quer zur Stange verschoben, wodurch ein Abschnitt von der Stange abgeschert wird.

Bei Warmumformmaschinen sind das Festmesser und das Schermesser normalerweise als Halbmesser ausgebildet, d.h. als Messer, die nur über einen Teil des Stangenumfangs an der Stange anliegen, wobei die zu scherende Stange während des Scherens zwischen den Halbmessern und Klemmbacken gehalten ist. Nach dem Scheren werden die Klemmbacken zum Vorschieben und Lüften der Stange weggefahren. Zur Zentrierung der Stange ist eine separate Zentriereinrichtung vorgesehen.

In der WO 01/28711 A1 ist eine Umformmaschine mit einer Schervorrichtung offenbart, die ein geschlitztes Rundmesser, bestehend aus einem als Halbmesser ausgebildeten ortsfesten Festmesser und einem dazu bewegbaren Zentrier- und Klemmstück, sowie ein mit dem geschlitzten Rundmesser zusammenwirkendes und dazu verschiebbares Schermesser, das als geschlossenes Rundmesser ausgebildet ist, aufweist.

Die EP 0 011 293 A , welche die Basis für den Oberbegriff des Anspruchs 1 bildet, offenbart eine Umformmaschine mit einer Schervorrichtung, deren Scherteil zwei Schermesser aufweist, wobei ein erstes Schermesser bei Vorwärtsbewegungen des Scherteils Stangenabschnitte schert, die einer ersten Umformstation zugeführt werden, und ein zweites Schermesser bei Rückwärtsbewegungen des Scherteils Stangenabschnitte schert, die einer zweiten Umformstation zugeführt werden.

Mit allen diesen bekannten Schervorrichtungen werden bei einem Stangenübergang von einer vorhergehenden zu scherenden Stange auf die nachfolgende zu scherende Stange Ausschussstücke geschert, die zumindest das Ende der vorhergehenden Stange und den Anfang der nachfolgenden Stange umfassen. Da diese Ausschussstücke die Solllänge von in den nachfolgenden Umformstationen weiterzuverarbeitenden Stangenabschnitten nicht aufweisen, werden sie normalerweise ausgeschieden und nicht den Umformstationen zugeführt. Dies hat zur Folge, dass in den Umformstationen Leerstellen vorhanden sind, was bei der Umformung zu Deformationen der Umformmaschine führt, die anders sind als im voll beladenen Zustand. Solche unterschiedlichen Deformationen führen zu Schwankungen der Geometrie der produzierten Gutteile. Bei Warmumformmaschinen kommt es ausserdem zu einer unterschiedlichen Auskühlung der Werkzeuge und zu Temperaturschocks. Dies alles kann die Einsatzzeit der Umformmaschinen bis zum nächsten Werkzeugwechsel reduzieren.

Im schlimmeren Fall ist jedoch auch denkbar, dass zwei zusammenklebende, zu kurze Endstücke (Stangenende und der darauf folgende Stangenanfang) gemeinsam zwar die Solllänge haben können, miteinander verpresst aber nur scheinbar ein homogenes Teil bilden. Dieser Fehler ist unter Umständen nicht erkennbar und kann dann im Betrieb zu Bauteilversagen führen, was insbesondere bei Sicherheitsbauteilen, wie z.B. Achsschenkeln oder Lenkungsteilen, problematisch ist.

Angesichts der Nachteile der bisher bekannten, oben beschriebenen Schervorrichtungen liegt der Erfindung die folgende Aufgabe zugrunde. Zu schaffen sind eine Umformmaschine mit einer Schervorrichtung zum Scheren einer Stange der eingangs erwähnten Art und ein Verfahren zum Betrieb einer solchen Umformmaschine, mit welchen Leerstellen in den Umformstationen vermieden werden können.

Diese Aufgabe wird durch die erfindungsgemässe Umformmaschine und das erfindungsgemässe Verfahren zum Betrieb einer Umformmaschine gelöst, wie sie in den unabhängigen Patentansprüchen 1 und 5 definiert sind. Bevorzugte Ausführungsvarianten ergeben sich aus den abhängigen Patentansprüchen.

Das Wesen der Erfindung besteht im Folgenden: Eine Umformmaschine weist eine Schervorrichtung zum Scheren einer Stange auf, die ein ortsfestes Festmesser mit einem Durchgang zur Durchführung der zu scherenden Stange und ein parallel zum Festmesser vorwärts und rückwärts bewegbares Scherteil umfasst. Das Scherteil weist ein erstes Schermesser auf, mit welchem ein aus dem Festmesser vorstehender Stangenabschnitt in einer Vorwärtsbewegung des Scherteils scherbar ist, und ein zweites Schermesser, mit welchem ein aus dem Festmesser vorstehender Stangenabschnitt in einer Rückwärtsbewegung des Scherteils scherbar ist. Die Umformmaschine weist ausserdem eine Entsorgungsstelle auf, zu der das zweite Schermesser alle von ihm gescherten Stangenabschnitte als Ausschussstücke transportiert.

Dadurch, dass die Umformmaschine eine Entsorgungsstelle aufweist, zu der das zweite Schermesser alle von ihm gescherten Stangenabschnitte als Ausschussstücke transportiert, ist ein zweites Schermesser vorhanden, das ausschliesslich zum Scheren der Stangenabschnitts-Ausschussstücke dient, die danach entsorgt werden. In jeder Vorwärtsbewegung des Scherteils können somit mit dem ersten Schermesser immer einteilige Stangenabschnitte mit der Solllänge geschert werden, die danach in den nachfolgenden Umformstationen weiterverarbeitet werden. Auf diese Weise können Leerstellen in den Umformstationen und die damit verbundenen Nachteile vermieden werden.

Vorzugsweise ist das Scherteil auf einem Scherschlitten angeordnet, der in einem Umformtakt der Umformmaschine linear vorwärts und rückwärts bewegbar ist. Da der Scherschlitten in einem Umformtakt vorwärts und rückwärts bewegbar ist, kann gleichzeitig mit jedem Umformschritt ein neuer Stangenabschnitt geschert werden, der die Solllänge aufweist. Allfällige Ausschussstücke können bei der Rückwärtsbewegung des Scherschlittens geschert werden, so dass der Umformtakt der Umformmaschine problemlos aufrecht erhalten werden kann. Ausserdem lässt sich eine lineare Bewegung des Scherschlittens einfach realisieren.

Bei einer vorteilhaften Ausführungsvariante weist die Umformmaschine einen Stangenanschlag auf, an dem das stangenabschnittseitige Ende der zu scherenden Stange beim Scheren anliegt und der in Richtung zum Festmesser hin oder von diesem weg verstellbar ist. Alternativ sind anstelle des Stangenanschlags das Festmesser sowie das erste und zweite Schermesser in Richtung zum Stangenanschlag hin oder von diesem weg verstellbar. Durch die hierdurch erreichte Verstellbarkeit des Stangenanschlags relativ zur Scherebene kann die Länge des zu scherenden Stangenabschnitts eingestellt werden, dessen Ende beim Scheren am Stangenanschlag anliegt. Dies ermöglicht ein Korrekturscheren, falls der Stangenübergang von einer Stange zur nächsten ungünstig liegt.

Die erfindungsgemässe Umformmaschine kann eine Warmumformmaschine oder eine Kaltumformmaschine sein. Besonders vorteilhaft ist die Erfindung bei Warmumformmaschinen, da dort normalerweise mit relativ kurzen Stangen gearbeitet wird und daher Stangenübergänge häufig sind. In Kaltumformmaschinen werden oft dünne Stangen in Form von Draht verarbeitet, welcher relativ lang ist und in Rollen vorliegt. Stangenübergänge sind hier relativ selten. Trotzdem ist die Erfindung auch bei Kaltumformmaschinen einsetzbar.

Beim erfindungsgemässen Verfahren zum Betrieb einer Umformmaschine mit einer Schervorrichtung werden Stangenabschnitte mit einer Solllänge, die nach dem Scheren in mindestens einer Umformstation der Umformmaschine weiterverarbeitet werden, durch das erste Schermesser in einer Vorwärtsbewegung des Scherteils geschert und Ausschussstücke, die nicht in einer Umformstation weiterverarbeitet werden, durch das zweite Schermesser in einer Rückwärtsbewegung des Scherteils geschert. Wie bereits erwähnt, können auf diese Weise Leerstellen in den Umformstationen und die damit verbundenen Nachteile vermieden werden.

Vorzugsweise wird der Stangenübergang von einer vorhergehenden zu scherenden Stange auf die nachfolgende zu scherende Stange durch das zweite Schermesser in einer Rückwärtsbewegung des Scherteils geschert. Bei einem Stangenübergang von einer Stange zur nächsten fallen normalerweise Ausschussstücke an, da der Stangenübergang im Allgemeinen nicht exakt an einer Solltrennstelle liegt. Ausserdem ist im Normalfall die Qualität der Stirnfläche der Stangenenden und -anfänge ebenfalls nicht ausreichend, so dass auch Anschnitte ausgeschieden werden müssen, die zufällig gerade die richtige Länge hätten. Diese Ausschussstücke werden in einer Rückwärtsbewegung des Scherteils geschert, so dass sie nicht zu den Umformstationen gelangen und dort trotzdem keine Leerstellen entstehen.

Mit Vorteil wird zunächst die Lage des Stangenübergangs von einer vorhergehenden zu scherenden Stange auf die nachfolgende zu scherende Stange ermittelt. Daraus wird dann berechnet, wie lange der letzte Stangenabschnitt am Ende der vorhergehenden zu scherenden Stange beim Scheren von Stangenabschnitten mit der Solllänge wäre. Falls die berechnete Länge dieses letzten Stangenabschnitts kleiner als eine vordefinierte Sicherheitslänge oder grösser als die Solllänge abzüglich der Sicherheitslänge ist, wird ein Korrekturscheren vorgenommen. Bei diesem wird durch das zweite Schermesser in einer Rückwärtsbewegung des Scherteils ein zusätzliches Ausschussstück geschert, dessen Länge derart ist, dass die unter Berücksichtigung dieses Ausschussstücks berechnete Länge des letzten Stangenabschnitts grösser als die vordefinierte Sicherheitslänge und kleiner als die Solllänge abzüglich der Sicherheitslänge ist.

Die Sicherheitslänge und das erwähnte Verfahren dienen dazu sicherzustellen, dass sich der Stangenübergang nicht zu nahe an einer der Scherebenen befindet. Auf diese Weise wird ein sauberes Scheren gewährleistet, so dass die Stangenabschnitte, die den an den Stangenübergang angrenzenden Ausschussstücken benachbart sind, zur Umformung verwendet werden können.

Bei einem bevorzugten Verfahren ist das zusätzliche Ausschussstück des Korrekturscherens kürzer als die Solllänge. Die für die Umformung verlorene Stangenmasse ist so vergleichsweise gering.

Bei einem alternativen vorteilhaften Verfahren ist das zusätzliche Ausschussstück des Korrekturscherens länger als die Solllänge. Auch auf diese Weise kann eine Längsverschiebung des Stangenübergangs erreicht werden.

Mit Vorteil wird die Länge des zusätzlichen Ausschussstücks des Korrekturscherens durch Verstellen eines Stangenanschlags, an dem das stangenabschnittseitige Ende der zu scherenden Stange beim Scheren anliegt, und Vorschieben der zu scherenden Stange bis zum Stangenanschlag eingestellt. Die zu scherende Stange kann so beim Scheren immer am Stangenanschlag anliegen.

Bevorzugt wird das Scheren eines zusätzlichen Ausschussstücks mit einer Länge kleiner als die Solllänge erreicht, indem die zu scherende Stange weniger weit vorgeschoben wird als bei Stangenabschnitten mit der Solllänge, so dass sie beim Scheren weniger weit aus dem Festmesser vorsteht. Der Stangenanschlag, an dem die zu scherende Stange während des Scherens üblicherweise anliegt, braucht hierzu nicht verschoben zu werden und kann deswegen ortsfest angeordnet werden, was die Konstruktion vereinfacht.

Im Folgenden werden die erfindungsgemässe Umformmaschine mit einer Schervorrichtung zum Scheren einer Stange und das erfindungsgemässe Verfahren zum Betrieb einer solchen Vorrichtung unter Bezugnahme auf die beigefügten Zeichnungen anhand von Ausführungsbeispielen detaillierter beschrieben. Es zeigen:
- Fig. 1 -: ein Ausführungsbeispiel einer erfindungsgemässen Umformmaschine mit einer Schervorrichtung zum Scheren einer Stange und einer Stangenzuführeinrichtung in einer Seitenansicht;
- Fig. 2 und 3 -: schematisch ein Scheren eines Stangenabschnitts mit einer Solllänge mit einem vorwärts bewegten ersten Schermesser;
- Fig. 4 und 5 -: schematisch ein Scheren eines Stangenübergangs mit einem rückwärts bewegten zweiten Schermesser;
- Fig. 6 -: schematisch eine Lage eines Stangenübergangs ausserhalb von Sicherheitsbereichen, bei der kein Korrekturscheren notwendig ist;
- Fig. 7 -: schematisch eine Lage eines Stangenübergangs innerhalb eines Sicherheitsbereichs, bei der ein Korrekturscheren notwendig ist;
- Fig. 8 und 9 -: schematisch ein Korrekturscheren einer zu diesem Zweck reduziert vorgeschobenen Stange; und
- Fig. 10 und 11 -: schematisch ein Korrekturscheren einer zu diesem Zweck weiter vorgeschobenen Stange mit Hilfe eines verschiebbaren Stangenanschlags.

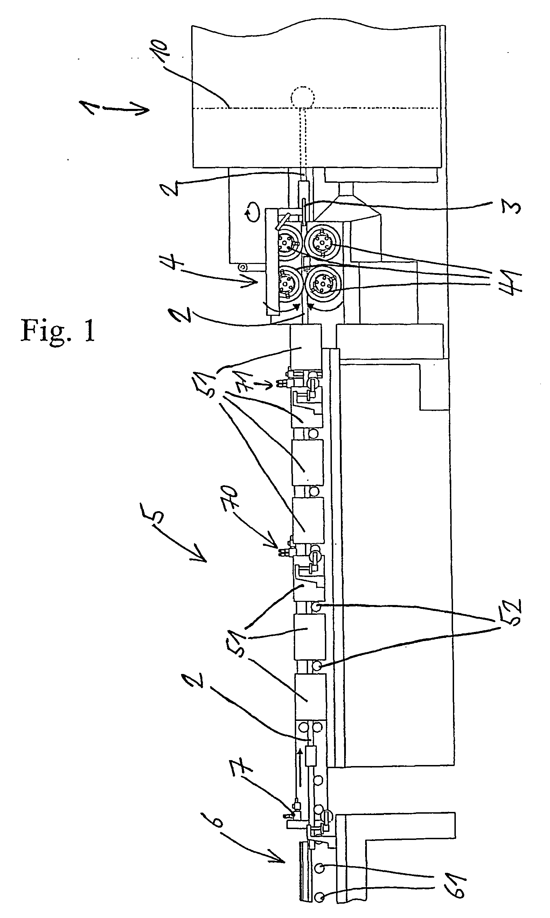

In Fig. 1 ist ein Ausführungsbeispiel einer erfindungsgemässen Umformmaschine 1 mit einer Schervorrichtung zum Scheren einer Stange 2 und einer Stangenzuführeinrichtung dargestellt. Die Scherebene 10 der Schervorrichtung ist strichpunktiert eingezeichnet. Die Stangenzuführeinrichtung umfasst eine Stangeneinzugsvorrichtung 4, die eine Stange 2 von einer Heizvorrichtung 5 her einzieht und der Schervorrichtung der Umformmaschine 1 zuführt. Die Stangeneinzugsvorrichtung 4 weist hierzu vier Einzugsrollen 41 auf, die sich in Pfeilrichtung drehen. Mit einem am Ende der Stangeneinzugsvorrichtung 4 angeordneten Messrad 3 ist der Vorschub der Stange 2 genau messbar.

Die Heizvorrichtung 5, die eine Vielzahl von Heizungen 51 aufweist, dient zum Erwärmen der Stange 2 vor der Umformung.

Es handelt sich hier also um eine Warmumformmaschine. Die Stange 2 liegt in der Heizvorrichtung 5 auf einer Vielzahl von Vorschubrollen 52 auf, die die Stange 2 zur Stangeneinzugsvorrichtung 4 hin fördern. Herkommen tut die Stange 2 von einem Stangenmagazin 6, das Vorschubrollen 61 aufweist. Beim Stangenvorschub können zwischen zwei aufeinanderfolgenden Stangen 2 aufgrund von verfahrensbedingt nicht gleichförmigen Einzugsbewegungen der Stangeneinzugsvorrichtung 4 zeitweise Lücken entstehen. Diese Lücken verschwinden spätestens nach dem Einziehen der nachfolgenden Stange 2 durch die Stangeneinzugsvorrichtung 4.

Um die Lage des Stangenübergangs von einer Stange 2 auf die nächste zu erfassen, sind an der Heizvorrichtung 5 Lichtschranken 7, 70 und 71 angeordnet. Mit diesen Lichtschranken kann jeweils bestimmt werden, wo der Stangenübergang sich gerade befindet, und es kann falls nötig ein Korrekturscheren ausgelöst werden, auf welches weiter unten im Detail eingegangen wird. Damit der Stangenübergang auch dann richtig erfasst wird, wenn im Bereich einer Lichtschranke aufgrund einer Einzugsbewegung der Stangeneinzugsvorrichtung 4 gerade keine Lücke zwischen zwei aufeinanderfolgenden Stangen 2 vorhanden ist, sind die Lichtschranken 70 und 71 als Doppellichtschranken ausgebildet.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen verwiesen.

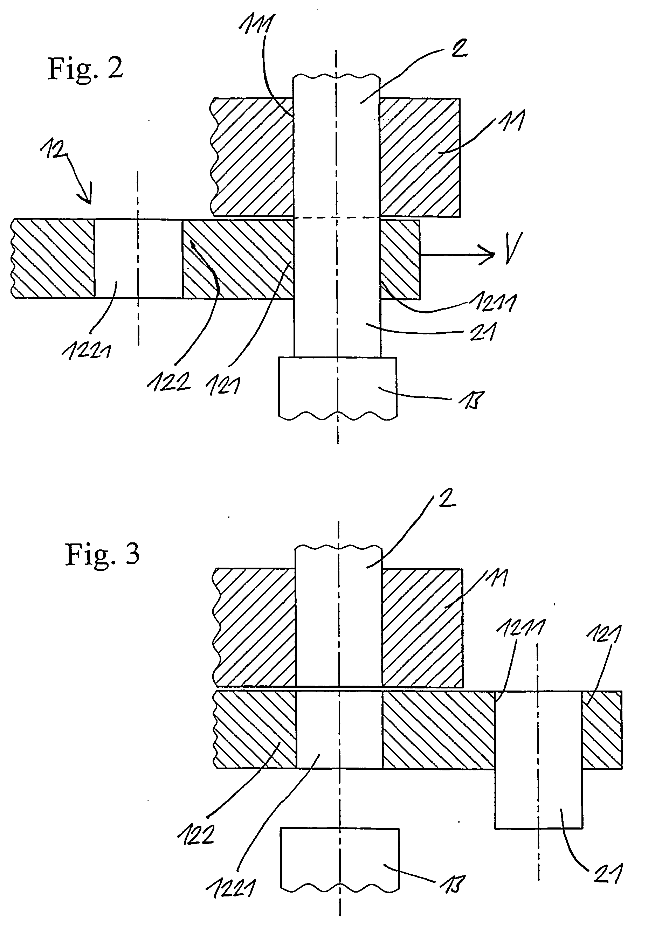

Die Fig. 2 und 3 zeigen die Schervorrichtung der Umformmaschine 1 beim Scheren eines Stangenabschnitts 21 einer Stange 2, welcher eine Solllänge aufweist und später in den nachfolgenden Umformstationen der Umformmaschine 1 umgeformt wird. Die Schervorrichtung umfasst ein ortsfestes Festmesser 11, ein parallel zum Festmesser 11 vorwärts und rückwärts bewegbares Scherteil 12 mit einem ersten Schermesser 121 und einem zweiten Schermesser 122 sowie einen Stangenanschlag 13. Das Festmesser 11, das erste Schermesser 121 und das zweite Schermesser 122 sind jeweils als geschlossene Rundmesser mit einem Durchgang 111, 1211 bzw. 1221 zur Durchführung der zu scherenden Stange 2 ausgebildet.

In der Situation gemäss Fig. 2 ist die zu scherende-Stange 2 durch den Durchgang 111 des Festmessers 11 und den Durchgang 1211 des ersten Schermessers 121 durchgeführt und liegt mit ihrem stangenabschnittseitigen Ende am Stangenanschlag 13 an. Durch eine Vorwärtsbewegung des Scherteils 12 in Richtung des Pfeils V wird der aus dem Festmesser 111 vorstehende Stangenabschnitt 21 vom Rest der Stange 2 abgeschert und durch das erste Schermesser 121 an eine Stelle transportiert, an der es von einem Greifer oder auf andere Weise für die erste Umformstation übernommen werden kann. In dieser in Fig. 3 dargestellten Situation liegt der Durchgang 1221 des zweiten Schermessers 122 direkt in der Fortsetzung des Durchgangs 111 des Festmessers 11.

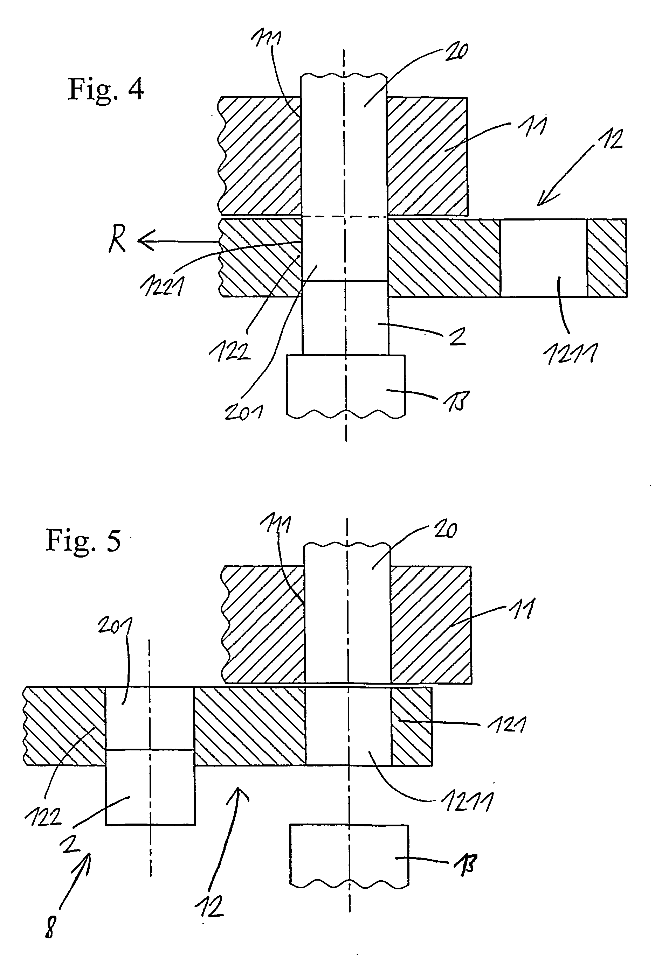

In den Fig. 4 und 5 ist dargestellt, wie der Stangenübergang von einer vorhergehenden zu scherenden Stange 2 auf eine nachfolgende zu scherende Stange 20 durch das zweite Schermesser 122 in einer Rückwärtsbewegung des Scherteils geschert wird.

Fig. 4 zeigt die Situation, in der die zu scherenden Stangen 2 und 20 durch den Durchgang 111 des Festmessers 11 und den Durchgang 1221 des zweiten Schermessers 122 durchgeführt sind und das dem Stangenübergang abgewandte Ende der Stange 2 am Stangenanschlag 13 anliegt. Die Stange 2 besteht hier nur noch aus einem letzten kleinen Stangenabschnitt, dessen Länge kleiner ist als die Solllänge. Durch eine Rückwärtsbewegung des Scherteils 12 in Richtung des Pfeils R wird ein aus dem Festmessers 111 vorstehender Stangenabschnitt 201 vom Rest der Stange 20 abgeschert und durch das zweite Schermesser 122 zusammen mit der Stange 2 an eine Entsorgungsstelle 8 transportiert, von der aus der Stangenabschnitt 201 und die Stange 2 entsorgt werden können. In dieser in Fig. 5 dargestellten Situation liegt der Durchgang 1211 des ersten Schermessers 121 wieder deckungsgleich in der Fortsetzung des Durchgangs 111 des Festmessers 11.

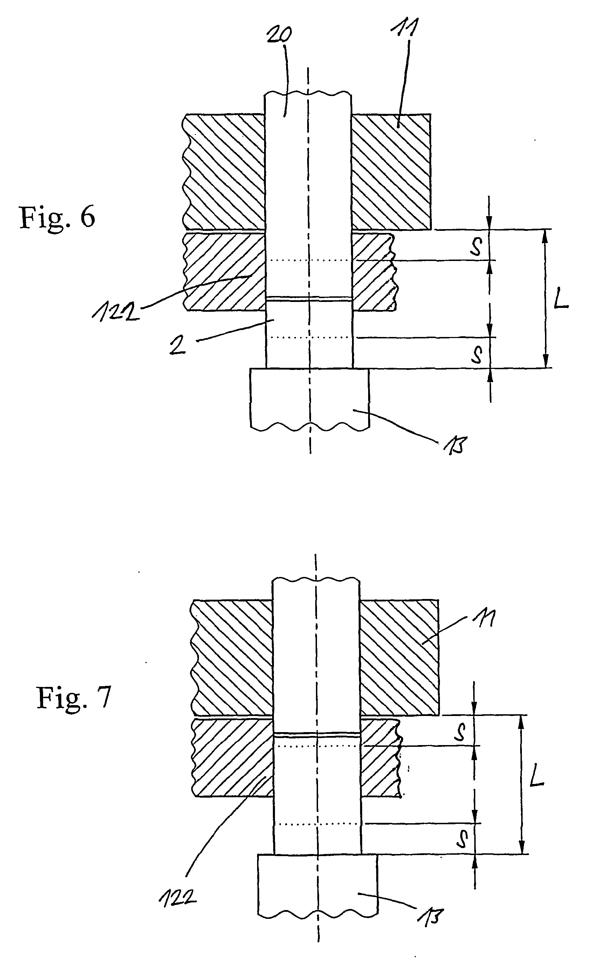

In Fig. 6 ist der Abstand zwischen dem Stangenanschlag 13 und dem Festmesser 11 mit L bezeichnet. Dieser Abstand L ergibt sich aus der Solllänge L der weiterzuverarbeitenden Stangenabschnitte, d.h. bei einer anderen gewünschten Solllänge muss normalerweise der Stangenanschlag 13 verstellt werden. Alternativ könnten auch das Festmesser 11 und das Schermesser 122 mit der Scherebene verstellt werden. Anschliessend an das Festmesser 11 und den Stangenanschlag 13 ist je eine Sicherheitslänge S eingezeichnet..

Sind, wie beim in Fig. 6 dargestellten Fall, die Distanzen vom Stangenübergang zum Festmesser 11 und vom Stangenübergang zum Stangenanschlag 13 jeweils grösser als die Sicherheitslänge S, kann problemlos rückwärts geschert werden.

Ist hingegen, wie beim in Fig. 7 dargestellten Fall, eine der Distanzen vom Stangenübergang zum Festmesser 11 oder vom Stangenübergang zum Stangenanschlag 13 kleiner als die Sicherheitslänge S, ist ein sauberes Scheren nicht mehr gewährleistet, da der gescherte Stangenabschnitt oder der im Festmesser 11 verbleibende Endabschnitt der zu scherenden Stange zu klein ist. Die Sicherheitslänge S hängt von verschiedenen Faktoren, wie z.B. Stangendicke, Material, Ausbildung der Messer, etc., insbesondere aber von der Genauigkeit der Messeinrichtung ab.

In einem solchen Fall wird vorgängig ein Korrekturscheren vorgenommen, bei dem durch das zweite Schermesser 122 in einer Rückwärtsbewegung des Scherteils 12 ein zusätzliches Ausschussstück geschert wird, dessen Länge derart ist, dass die unter Berücksichtigung dieses Ausschussstücks berechnete Länge des letzten Stangenabschnitts einer Stange grösser als die vordefinierte Sicherheitslänge S und kleiner als die Solllänge L abzüglich der Sicherheitslänge S ist. Die Berechnung der Länge des letzten Stangenabschnitts einer Stange wird durch die im Zusammenhang mit Fig. 1 erwähnte Erfassung der Lage des Stangenübergangs von einer Stange auf die nächste mittels der Lichtschranken 7, 70 und 71 ermöglicht.

Das Korrekturscheren kann auf verschiedene Weisen erfolgen.

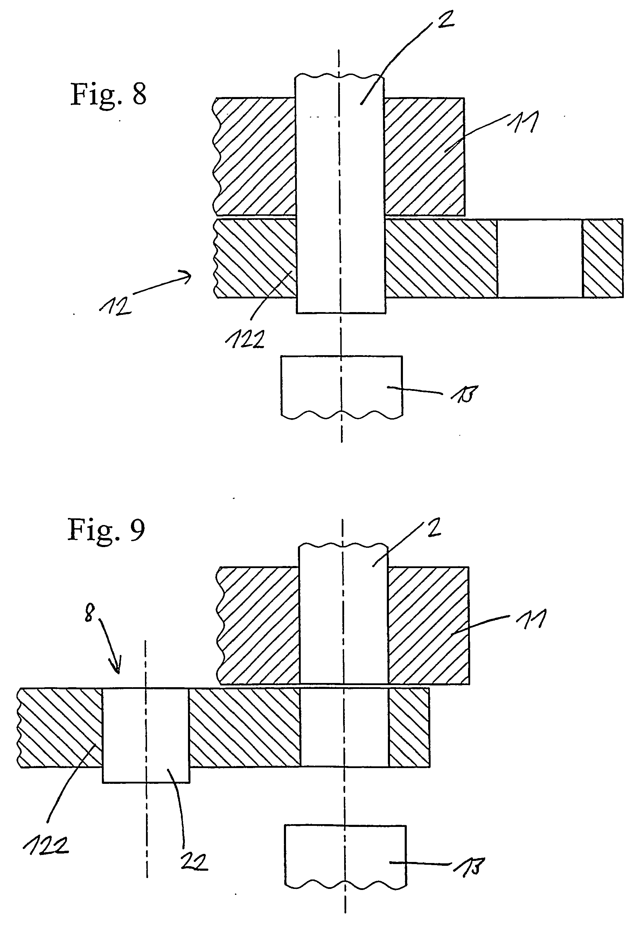

Bei der in den Fig. 8 und 9 dargestellten Variante wird die zu scherende Stange 2 einmal nicht ganz bis zum Stangenanschlag 13 vorgeschoben, wobei hierzu die Stangeneinzugsvorrichtung 4 entsprechend gesteuert werden muss, und in dieser Lage in einer Rückwärtsbewegung des zweiten Schermessers 122 geschert. Es kann so ein Ausschussstück 22 mit einer Länge kleiner als die solllänge L weggeschert und zur Entsorgungsstelle 8 transportiert werden.

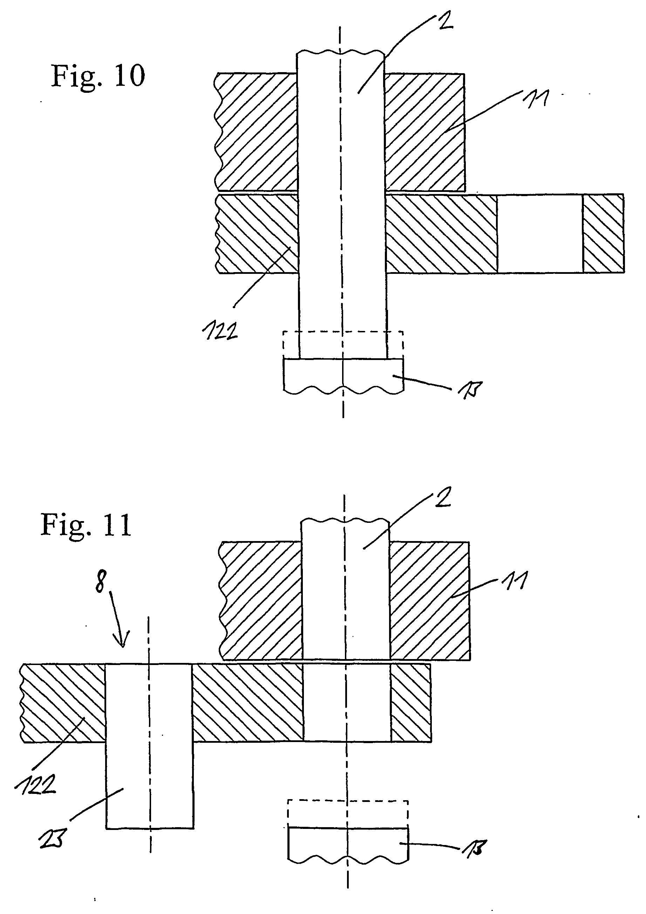

Bei der in den Fig. 10 und 11 dargestellten Variante wird der Stangenanschlag 13 für eine Scherung in einer Rückwärtsbewegung des zweiten Schermessers 122 vom Festmesser 11, d.h. von der Scherebene, wegverschoben. Die zu scherende Stange 2 wird ganz bis zum wegverschobenen Stangenanschlag 13 vorgeschoben und in dieser Lage vom zweiten Schermesser 122 geschert. Es kann so ein Ausschussstück 23 mit einer Länge grösser als die Solllänge L weggeschert und zur Entsorgungsstelle 8 transportiert werden. Danach wird der Stangenanschlag 13 wieder in die gestrichelt dargestellte Ausgangsposition zurückverstellt.

Zu den vorbeschriebenen erfindungsgemässen Umformmaschinen mit Schervorrichtungen sind weitere konstruktive Variationen realisierbar. Hier ausdrücklich erwähnt sei noch:
- Die Ermittlung der Lage des Stangenübergangs von einer vorhergehenden zu scherenden Stange auf die nachfolgende zu scherende Stange muss nicht unbedingt mittels Lichtschranken erfolgen, sondern kann mit anderen Stangenendüberwachungseinheiten, vorzugsweise elektronisch, realisiert werden.
- Das Festmesser und die Schermesser brauchen keine geschlossenen Rundmesser zu sein. Denkbar sind auch andere Messerarten wie beispielsweise Halbmesser.

## Patentansprüche

1. Umformmaschine (1) mit einer Schervorrichtung zum Scheren einer Stange (2, 20), wobei die Schervorrichtung ein ortsfestes Festmesser (11) mit einem Durchgang (111) zur Durchführung der zu scherenden Stange (2, 20) und ein parallel zum Festmesser (11) vorwärts und rückwärts bewegbares Scherteil (12) umfasst, das ein erstes Schermesser (121) aufweist, mit welchem ein aus dem Festmesser (11) vorstehender Stangenabschnitt (21) in einer Vorwärtsbewegung des Scherteils (12) scherbar ist, und ein zweites Schermesser (122), mit welchem ein aus dem Festmesser (11) vorstehender Stangenabschnitt (22, 23, 201) in einer Rückwärtsbewegung des Scherteils (12) scherbar ist, **dadurch gekennzeichnet, dass** sie eine Entsorgungsstelle (8) aufweist, zu der das zweite Schermesser (122) alle von ihm gescherten Stangenabschnitte (22, 23, 201) als Ausschussstücke transportiert.

2. Umformmaschine (1) nach Anspruch 1, **dadurch gekennzeichnet, dass** das Scherteil (12) auf einem Scherschlitten angeordnet ist, der in einem Umformtakt der Umformmaschine (1) linear vorwärts und rückwärts bewegbar ist.

3. Umformmaschine (1) nach Anspruch 1 oder 2, **dadurch gekennzeichnet, dass** sie einen Stangenanschlag (13) aufweist, an dem das stangenabschnittseitige Ende der zu scherenden Stange (2, 20) beim Scheren anliegt und der in Richtung zum Festmesser (11) hin oder von diesem weg verstellbar ist.

4. Umformmaschine (1) nach Anspruch 1 oder 2, **dadurch gekennzeichnet, dass** sie einen Stangenanschlag (13) aufweist, an dem das stangenabschnittseitige Ende der zu scherenden Stange (2, 20) beim Scheren anliegt, und das Festmesser (11) sowie das erste Schermesser (121) und das zweite Schermesser (122) in Richtung zum Stangenanschlag (13) hin oder von diesem weg verstellbar sind.

5. Verfahren zum Betrieb einer Umformmaschine (1) mit einer Schervorrichtung nach einem der Ansprüche 1 bis 4, **dadurch gekennzeichnet, dass** Stangenabschnitte (21) mit einer Solllänge (L), die nach dem Scheren in mindestens einer Umformstation der Umformmaschine (1) weiterverarbeitet werden, durch das erste Schermesser (121) in einer Vorwärtsbewegung des Scherteils (12) geschert werden und Ausschussstücke (22, 23, 201), die nicht in einer Umformstation weiterverarbeitet werden, durch das zweite Schermesser (122) in einher Rückwärtsbewegung des Scherteils (12) geschert werden.

6. Verfahren nach Anspruch 5, **dadurch gekennzeichnet, dass** der Stangenübergang von einer vorhergehenden zu scherenden Stange (2) auf die nachfolgende zu scherende Stange (20) durch das zweite Schermesser (122) in einer Rückwärtsbewegung des Scherteils (12) geschert wird.

7. Verfahren nach Anspruch 5 oder 6, **dadurch gekennzeichnet, dass** die Lage des Stangenübergangs von einer vorhergehenden zu scherenden Stange (2) auf die nachfolgende zu scherende Stange (20) ermittelt wird, daraus berechnet wird, wie lange der letzte Stangenabschnitt am Ende der vorhergehenden zu scherenden Stange (2) beim Scheren von Stangenabschnitten (21) mit der Solllänge (L) wäre, und, falls die berechnete Länge dieses letzten Stangenabschnitts kleiner als eine vordefinierte Sicherheitslänge (S) oder grösser als die Solllänge (L) abzüglich der Sicherheitslänge (S) ist, ein Korrekturscheren vorgenommen wird, bei dem durch das zweite Schermesser (122) in einer Rückwärtsbewegung des Scherteils (12) ein zusätzliches Ausschussstück (22, 23) geschert wird, dessen Länge derart ist, dass die unter Berücksichtigung dieses Ausschussstücks (22, 23) berechnete Länge des letzten Stangenabschnitts grösser als die vordefinierte Sicherheitslänge (S) und kleiner als die Solllänge (L) abzüglich der Sicherheitslänge (S) ist.

8. Verfahren nach Anspruch 7, **dadurch gekennzeichnet, dass** das zusätzliche Ausschussstück (22) kürzer ist als die Solllänge (L).

9. Verfahren nach Anspruch 7, **dadurch gekennzeichnet, dass** das zusätzliche Ausschussstück (23) länger ist als die Solllänge (L).

10. Verfahren nach einem der Ansprüche 7 bis 9, **dadurch gekennzeichnet, dass** die Länge des zusätzlichen Ausschussstücks (22, 23) durch Verstellen eines Stangenanschlags (13), an dem das stangenabschnittseitige Ende der zu scherenden Stange (2) beim Scheren anliegt, und Vorschieben der zu scherenden Stange (2) bis zum Stangenanschlag (13) eingestellt wird.

11. Verfahren nach Anspruch 8, **dadurch gekennzeichnet, dass** das Scheren eines zusätzlichen Ausschussstücks (22) mit einer Länge kleiner als die Solllänge (L) erreicht wird, indem die zu scherende Stange (2) weniger weit vorgeschoben wird als bei Stangenabschnitten (21) mit der Solllänge (L).

## Claims

1. Forming machine (1) having a shearing device for shearing a bar (2, 20), the shearing device comprising a fixed blade (11), with a passage (111) for feeding through the bar (2, 20) to be sheared, and a shearing part (12) which can be moved forward and backward parallel to the fixed blade (11) and has a first shearing blade (121), with which a bar section (21) projecting from the fixed blade (11) can be sheared in a forward movement of the shearing part (12), and a second shearing blade (122), with which a bar section (22, 23, 201) projecting from the fixed blade (11) can be sheared in a backward movement of the shearing part (12), **characterized in that** it has a disposal point (8), to which the second shearing blade (122) transports, as scrap pieces, all the bar sections (22, 23, 201) sheared by it.

2. Forming machine (1) as claimed in claim 1, **characterized in that** the shearing part (12) is arranged on a shearing slide which can be moved forward and backward linearly in a forming cycle of the forming machine (1).

3. Forming machine (1) as claimed in claim 1 or 2, **characterized in that** it has a bar stop (13), against which the bar-section-side end of the bar (2, 20) to be sheared bears during the shearing and which can be adjusted in the direction toward or away from the fixed blade (11).

4. Forming machine (1) as claimed in claim 1 or 2, **characterized in that** it has a bar stop (13), against which the bar-section-side end of the bar (2, 20) to be sheared bears during the shearing, and the fixed blade (11) and also the first shearing blade (121) and the second shearing blade (122) can be adjusted in the direction toward or away from the bar stop (13).

5. Method of operating a forming machine (1) having a shearing device as claimed in one of claims 1 to 4, **characterized in that** bar sections (21) having a desired length (L) which are subsequently processed in at least one forming station of the forming machine (1) after the shearing are sheared by the first shearing blade (121) in a forward movement of the shearing part (12), and scrap pieces (22, 23, 201), which are not subsequently processed in a forming station, are sheared by the second shearing blade (122) in a backward movement of the shearing part (12).

6. Method as claimed in claim 5, **characterized in that** the bar transition from a preceding bar (2) to be sheared to the following bar (20) to be sheared is sheared by the second shearing blade (122) in a backward movement of the shearing part (12).

7. Method as claimed in claim 5 or 6, **characterized in that** the position of the bar transition from a preceding bar (2) to be sheared to the following bar (20) to be sheared is determined, the length which the last bar section at the end of the preceding bar (2) to be sheared would have after the shearing of bar sections (21) having the desired length (L) is calculated therefrom, and, if the calculated length of this last bar section is less than a predefined safety length (S) or is greater than the desired length (L) minus the safety length (S), corrective shearing is carried out, during which an additional scrap piece (22, 23) is sheared by the second shearing blade (122) in a backward movement of the shearing part (12), the length of said scrap piece (22, 23) being such that the length, calculated with regard to this scrap piece (22, 23), of the last bar section is greater than the predefined safety length (S) and less than the desired length (L) minus the safety length (S).

8. Method as claimed in claim 7, **characterized in that** the additional scrap piece (22) is shorter than the desired length (L).

9. Method as claimed in claim 7, **characterized in that** the additional scrap piece (23) is longer than the desired length (L).

10. Method as claimed in one of claims 7 to 9, **characterized in that** the length of the additional scrap piece (22, 23) is set by adjusting a bar stop (13), against which the bar-section-side end of the bar (2) to be sheared bears during the shearing, and by advancing the bar (2) to be sheared up to the bar stop (13).

11. Method as claimed in claim 8, **characterized in that** the shearing of an additional scrap piece (22) having a length less than the desired length (L) is achieved by the bar (2) to be sheared being advanced to a smaller extent than in the case of bar sections (21) having the desired length (L).

## Revendications

1. Machine de formage (1) comportant un dispositif de cisaillement destiné à sectionner une barre (2, 20) par cisaillement, le dispositif de cisaillement comprenant une lame fixe (11) immobile dans son positionnement, qui présente un passage (111) permettant à la barre (2, 20) à sectionner d'être dirigée à travers elle, et un élément de cisaillement (12) qui est déplaçable vers l'avant et vers l'arrière, parallèlement à la lame fixe (11), et qui présente une première lame de cisaillement (121), avec laquelle un tronçon de barre (21) dépassant de la lame fixe (11) est sectionnable lors d'un déplacement en avant de l'élément de cisaillement (12), ainsi qu'une deuxième lame de cisaillement (122) avec laquelle un tronçon de barre (22, 23, 201) dépassant de la lame fixe (11) est sectionnable lors d'un déplacement en arrière de l'élément de cisaillement (12), **caractérisée en ce qu'**elle présente un poste de mise au rebut (8), auquel la deuxième lame de cisaillement (122) transporte, en tant que morceaux à rejeter, tous les tronçons de barre (22, 23, 201) qu'elle a sectionnés.

2. Machine de formage (1) selon la revendication 1, **caractérisée en ce que** l'élément de cisaillement (12) est disposé sur un chariot de cisaillement, qui est déplaçable en ligne droite, vers l'avant et vers l'arrière, suivant une cadence de formage de la machine de formage (1).

3. Machine de formage (1) selon la revendication 1 ou 2, **caractérisée en ce qu'**elle présente une butée à barre (13), contre laquelle l'extrémité, située côté tronçon de barre, de la barre (2, 20) à sectionner s'applique lors du sectionnement, et qui est ajustable par déplacement en direction de la lame fixe (11) ou dans une direction l'éloignant de cette dernière.

4. Machine de formage (1) selon la revendication 1 ou 2, **caractérisée en ce qu'**elle présente une butée à barre (13), contre laquelle l'extrémité, située côté tronçon de barre, de la barre (2, 20) à sectionner s'applique lors du sectionnement, et la lame fixe (11) ainsi que la première lame de cisaillement (121) et la deuxième lame de cisaillement (122) sont ajustables par déplacement en direction de la butée à barre (13) ou dans une direction les éloignant de cette dernière.

5. Procédé pour l'exploitation d'une machine de formage (1) comportant un dispositif de cisaillement selon l'une des revendications 1 à 4, **caractérisé en ce que** des tronçons de barre (21) d'une longueur prescrite (L), qui font l'objet, après le sectionnement, d'un traitement ultérieur dans au moins un poste de formage de la machine de formage (1), sont sectionnés par cisaillement au moyen de la première lame de cisaillement (121), lors d'un déplacement en avant de l'élément de cisaillement (12), et des morceaux à rejeter (22, 23, 201), qui ne font pas l'objet d'un traitement ultérieur dans un poste de formage, sont sectionnés par cisaillement au moyen de la deuxième lame de cisaillement (122), lors d'un déplacement en arrière de l'élément de cisaillement (12).

6. Procédé selon la revendication 5, **caractérisé en ce que** la partie de transition de barre d'une barre (2) à sectionner, placée en avant, à la barre suivante (20) à sectionner, est sectionnée par cisaillement au moyen de la deuxième lame de cisaillement (122), lors d'un déplacement en arrière de l'élément de cisaillement (12).

7. Procédé selon la revendication 5 ou 6, **caractérisé en ce que** la position de la partie de transition de barre d'une barre (2) à sectionner, placée en avant, à la barre suivante (20) à sectionner, est déterminée, il en est déduit par calcul, quelle longueur aurait le dernier tronçon de barre à l'extrémité de la barre (2) à sectionner, placée en avant, lors du sectionnement par cisaillement de tronçons de barre (21) sous la longueur prescrite (L), et, dans le cas où la longueur calculée de ce dernier tronçon de barre est inférieure à une longueur de sécurité (S), prédéfinie, ou supérieure à la longueur prescrite (L) après déduction de la longueur de sécurité (S), il est procédé à un sectionnement correctif par cisaillement, selon lequel au moyen de la deuxième lame de cisaillement (122) est sectionné par cisaillement, lors d'un déplacement en arrière de l'élément de cisaillement (12), un morceau à rejeter supplémentaire (22, 23), dont la longueur est telle que la longueur calculée, en prenant en compte ce morceau à rejeter (22, 23), du dernier tronçon de barre soit supérieure à la longueur de sécurité (S), prédéfinie, et inférieure à la longueur prescrite (L) après déduction de la longueur de sécurité (S).

8. Procédé selon la revendication 7, **caractérisé en ce que** le morceau à rejeter supplémentaire (22) est plus court que la longueur prescrite (L).

9. Procédé selon la revendication 7, **caractérisé en ce que** le morceau à rejeter supplémentaire (23) est plus long que la longueur prescrite (L).

10. Procédé selon l'une des revendications 7 à 9, **caractérisé en ce que** la longueur du morceau à rejeter supplémentaire (22, 23) est réglée par déplacement d'une butée à barre (13), contre laquelle l'extrémité, située côté tronçon de barre, de la barre (2) à sectionner s'applique lors du sectionnement, et avancement de la barre (2) à sectionner jusqu'au contact de la butée à barre (13).

11. Procédé selon la revendication 8, **caractérisé en ce que** le sectionnement d'un morceau à rejeter supplémentaire (22) d'une longueur inférieure à la longueur prescrite (L) est obtenu en poussant la barre (2) à sectionner moins loin que dans le cas de tronçons de barre (21) ayant la longueur prescrite (L).
